# EUROPEAN PATENT APPLICATION

(11) **EP 1 701 489 A1**
(43) Date of publication of application: **13.09.2006**
(21) Application number: 06004704.0
(22) Date of filing: 08.03.2006
(51) Int. Cl.: H04L 12/56

(54) **Method and apparatus for managing packet data links in a packet data switched network**

(30) Priority: 09.03.2005 US 659400 P; 24.10.2005 US 255943
(71) Applicant: Telefonaktiebolaget LM Ericsson (publ), 164 83 Stockholm (SE)
(72) Inventor: Georges, Melissa, Dollar-des-Ormeaux Quebec H9G 1T2 (CA); Lemieux, Yves, Quebec, H9H 4M1 (CA)
(74) Representative: Tonscheidt, Andreas

(57) **Abstract**

A method for establishing a packet data session for a Mobile Terminal (MT) in packet data network. The method uses a Bandwidth Broker (BB) node for receiving from an aggregation node Quality-of-Service (QoS) measurements for a path assigned to the MT for transmission of packet data for the MT. The BB node stores policies for admission control for admitting packet data session for the MT. Based on the received QoS and the stored policies, the BB node admits the assigned path for providing packet data for the MT.

## Description

This non-provisional patent application claims priority based upon the prior U.S provisional patent application entitled "Policy and measurement-based admission control and management for the packet-switched domain of the UMTS core network", application number 60/659,400, filed March 9, 2005, in the names of Melissa Georges and Yves Lemieux.

### Background of the invention

### Field of the invention

The invention relates to a method and node for providing Quality-of-Service (QoS) level in a packet data switched network

### Description of the Related Art

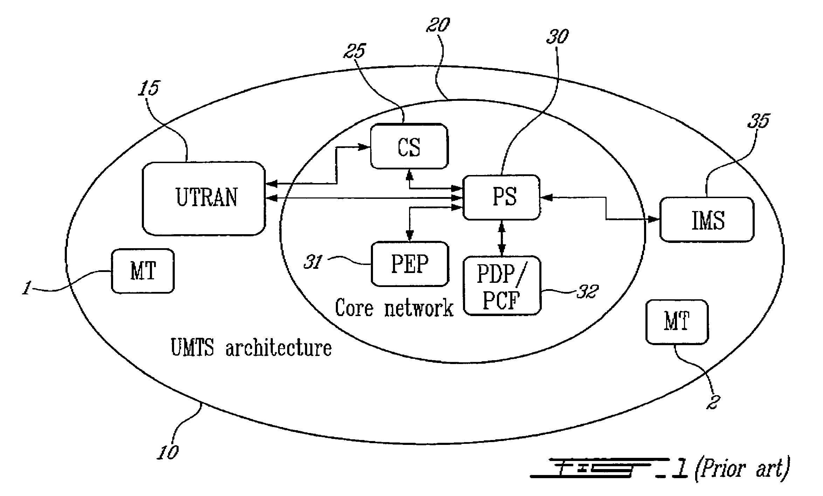

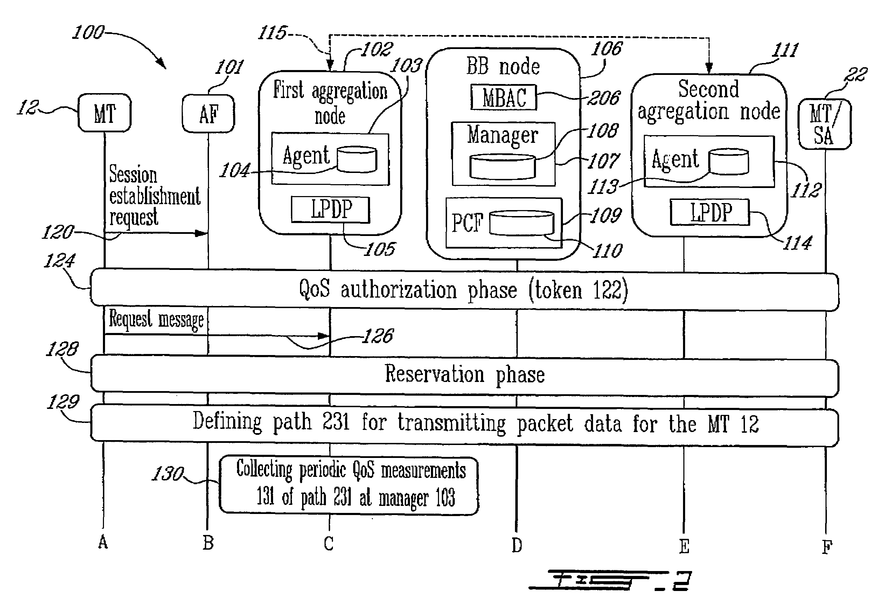

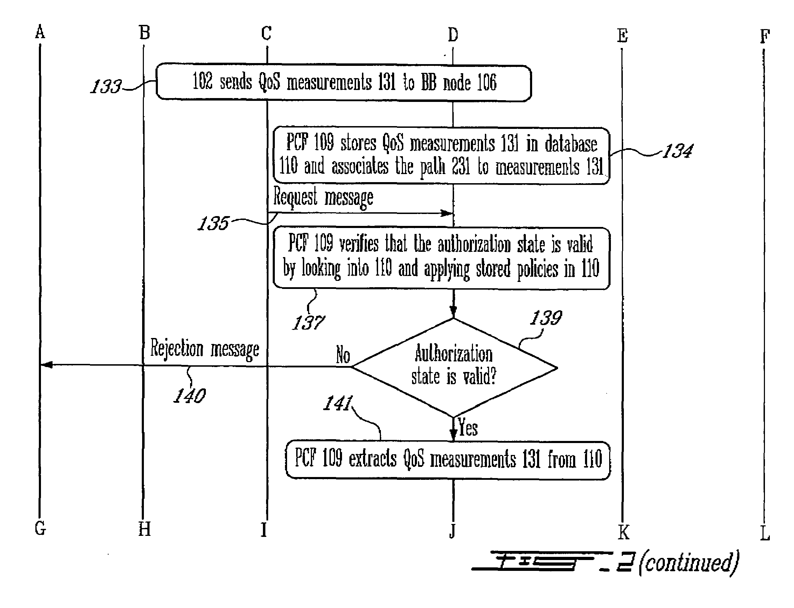

An Universal Mobile Telecommunications System (UMTS) network architecture such as a UMTS architecture 10 depicted in Figure 1, which is a schematic diagram illustrating an UMTS architecture 10 in accordance to the prior art, based on an Internet Protocol (IP) network, and also a suite of new services. UMTS offers services such as voice or Short Messaging Service (SMS) and bearer services, which provide the capability for packet data routing between access points or Mobile Terminals (MTs). It is possible to negotiate and renegotiate the characteristics of a bearer service at session or connection establishment and during ongoing session or connection. The UMTS network architecture 10 comprises an originating Mobile Terminal (MT) 1, a radio interface UMTS Terrestrial Radio Access Network (UTRAN) 15 for providing radio access to a Core Network (CN) 20 for the MT 12. The CN 20 is constituted of a packet-switched (PS) domain 30 and a circuit-switched (CS) domain 25. The CN 20 provides switching and routing for packet data. The CN 20 also contains the databases and network management functions.

Some of the circuit switched network elements are Mobile Services Switching Centre (MSC), a Visitor location register (VLR) and Gateway MSC. Some of the Packet switched network elements are Serving General Packet Radio Services (GPRS) Support Node (SGSN) and Gateway GPRS Support Node (GGSN). Both domains share some network elements such as a Home Location Register (HLR).

In order to meet Quality-of-service (QoS) requirements of emerging services and applications through the PS 30 of the UMTS CN 20, the UMTS network architecture 10 adds an IP Multimedia Sub-system (IMS) 35. The IMS 35 facilitates the tasks of network configuration for admission control and resource management based on policies. The IMS 35 enables applications such as Voice over IP (VoIP) and multimedia applications. The IMS 35 is supported by the Common Open Policy Service (COPS) protocol Usage for Policy Provisioning (COPS-PR), Request For Comments (RFC) 3084, 34 pages, published in March 2001 by the Engineering Task Force (IETF).

The UMTS network architecture 10 also contains a Policy Repository, a Policy Management Tool, a policy client such as a Policy Enforcement Point (PEP) 31 and a policy server such as Policy Decision Point (PDP) 32. Policies are articulated around conditions and configuration actions. So Policy-based networking is a rather promising approach that can work for the interests of a variety of domains, such as QoS and security such as in Third Generation Partnership Project (3GPP) Technical Specification Group Services and System Aspects, IP Multimedia Subsystem (IMS), Stage 2, 3GPP TS 23.228 v 5.9,0 (2003-06), 127 pages, published in 2003 by the IETF.

Resources are defined as being value in a network infrastructure to which rules or policy criteria are first applied before access is granted. Examples of resources may include buffers in a router and bandwidth on an interface. Resources are defined as path established and reserved for receiving and sending packet data from and to a MT in the UMTS network architecture 10. The resources considered may be Label Switching Paths (LSPs). For example, the policy-based admission control may be a condition like allowing a LSP if a traffic bandwidth is below 380 kbps. Another example can be to allow a LSP or resource for the MT 1 if the traffic is above a certain threshold.

An IP-in-IP tunnel of Mobile IP Network can be provided by the one or multiple LSPs through a Multiprotocol Label Switching (MPLS) architecture. MPLS may support Large scale Mobile-IP. For example, Label Distribution Protocol (LDP) may be used for establishing LSPs between a mobile agent such as between a Home Agent (HA) (not shown) an anchor point (not shown) and ultimately to the roaming MT 1. When the MT 1 is moving to a foreign area, the existing LSPs may be extended without service interrupt. The short-cut LSPs between source and destination MTs may be recalculated to avoid the long cascaded connections.

With regard to the policy aspect, the 3GPP policy specifications are globally conformant with the IETF specifications on policy-based networking and policy-based admission control. In the management scheme, the policy approach serves IMS services and applications, The mandatory policy nodes are generally located outside the IMS 35 such as the Policy Enforcement Point (PEP) 31 that may be incorporated into a peripheral node of the CN 20 such as a GGSN in a General Packet Radio Service (GPRS) network.

The phases of the end-to-end session establishment process between the MT 1 and another MT 2 or another server from which the MT 1 may receive IMS services in the UMTS network 10 are: authorization of resources, reservation of resources, commitment of resources and billing. Besides, policy-based admission control is executed for each IMS user request This traffic engineering application relies upon the resources' availability and the operator-defined policies.

As for the resources' availability aspect, the 3GPP specifications simply mandate a vendor/operator-specific admission control mechanism that is internal to the two peripheral server nodes of the packet-switched domain. It also suggests the use of the MPLS and Differentiated Services (DiffServ) technologies. Diffserv is an architecture for providing different types or levels of service for network traffic. However, UMTS network architecture exhibits properties that exacerbate the problem of congestion control - hence of admission control. The properties are those of long range dependence and self-similarity that cause fluctuations, which are large in amplitude and persistent over many timescales, They are ascribable with the various behaviors of the users and the unstable character of the applications themselves.

As of today, applications are likely to be conveyed solely over the packet-switched domain of the CN 20. In order to satisfy QoS requirements of the IMS services, a policy-based management approach can be applied. IMS services also rely upon a policy-based admission control algorithm. Both the mechanism and the global approach define the aspects of policy and resources' availability.

The aspects of policy and resources' availability are covered 3GPP specifications, However, the 3GPP specifications are prone to improvements. Indeed, the gaps linked to the policy aspect include the limited policies, the small number of policy clients and the exclusive use of the management approach for the multimedia and VoIP applications. The weak elements of the resources' availability aspect are essentially due to the fact that it is almost not covered in 3GPP specifications in spite of the revealed challenging traffic properties of long range dependence (LDR) and self similarity.

For example, MPLS and DiffServ are two technologies that are not sufficient for providing real QoS offering for applications and services with QoS requirements in a packet data switched network such as the network 10. More particularly, there is no linkage between policy-based admission control and resources' availability in the UMTS network architecture 10 using the IMS 35. For that reason, there is a need to improve the cooperation between policy and resources' availability and for providing an efficient traffic engineering system. The invention provides a solution to that problem.

### Summary of the Invention

It is a broad object of the present invention to provide a method for establishing a packet data session for a Mobile Terminal (MT) in packet data switched network, the method comprising steps of:

receiving at a Bandwidth Broker (BB) node from an aggregation node, Quality-of-Service (QoS) measurements for a path assigned to the MT, the path being assigned for transmission of packet data for the MT;

storing at the BB node the received QoS measurements from the aggregation node;

receiving at the BB a request message for admitting the assigned path at the BB node;

verifying at the BB node, based on policies stored at the BB node, the authorization state for the assigned path;

extracting QoS measurements at the BB node; and

admitting at the BB node the assigned path based on the extracted QoS measurements and on policies stored at the BB node.

It is another broad object of the present invention to provide a Bandwidth Broker (BB) node for admitting an assigned path for a Mobile Terminal in a packet data network, the BB node comprising:

a manager for receiving from an aggregation node Quality-of-Service (QoS) measurements for the path assigned to the MT, storing the received QoS measurements in a first database and receiving a request message for admitting the assigned path, wherein the path is assigned for transmission of packet data for the MT;

a Policy Control Function (PCF) for verifying, based on policies stored in a second database, the authorization state for the assigned path and extracting QoS measurements from the first database; and

a measurement-based admission control mechanism for admitting the assigned path based on the extracted QoS measurements and on policies stored in the second database.

### Brief Description of the Drawings

For a more detailed understanding of the invention, for further objects and advantages thereof, reference can now be made to the following description, taken in conjunction with the accompanying drawings, in which:

Figure 1 depicts a schematic diagram illustrating an UMTS architecture 10 for bloc in accordance to the prior art; and

Figure 2 is a nodal operation and signal flow diagrams illustrating a flow of messages and steps of a method for managing Quality-of-Service (QoS) measurements and session admission for a Mobile Terminal (MT) in a packet data switched network.

### Detailed Description of the Preferred Embodiments

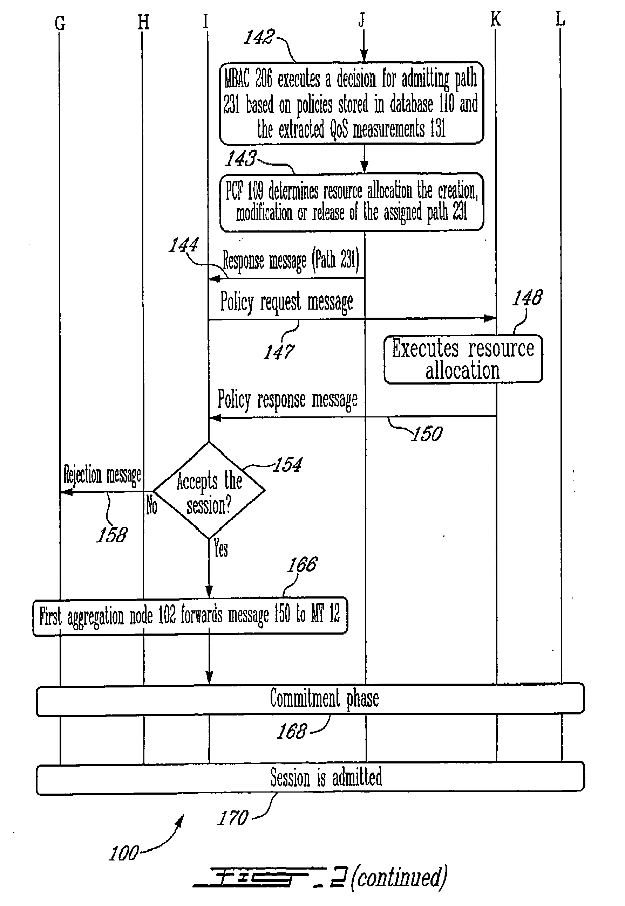

Reference is now made to Figure 2, which is a nodal operation and signal flow diagrams illustrating a flow of messages and steps of a method for managing Quality-of-Service (QoS) measurements and session admission for a Mobile Terminal (MT) 12 in a packet data network 100.

The packet data network 100 allows establishment of a packet data session for transmitting packet data between the originating MT 12 and a destination MT or Service Application 22. The MT 12 may be any mobile equipment that is registered in the packet data network 100 and that can operate in the packet data switched network 100. The MT 12 may roam in the packet data network 100 and also receive packet data services from different locations namely service areas in the packet data network 100. The SA 22 may be an application server that can provide Internet services or VoIP to the MT 12. The packet data network 100 comprises an Application Function (AF) 101, a first aggregation node 102, a Bandwidth Broker (BB) node 106 and a second aggregation node 111.

The AF 101 ensures that messages from and to the MT 12 are transmitted to and from the packet data switched network 100. The first aggregation node 102 and the second aggregation node 111 include agents103 and 112 respectively. The agents 103 and 112 periodically collect packet data connection utilization measurements and communicate these measurements to the BB node 104. The agents 103 and 112 may use a network management protocol such as Simple Network Management Protocol (SNMP), which is an application layer protocol that facilitates the exchange of management information between network elements.

Common Open Policy Service (COPS) protocol is a simple query and response protocol that can be used to exchange policy information (request and response messages) between network elements in the packet data network. References to SNMP and COPS may be used for supporting QoS measurements process and convey the resources' availability related data.

The first aggregation node 102 processes uplink requests from the MT 12 and the second aggregation node 111 processes downlink requests to the MT 12. However, both aggregation nodes 102 and 111 are concerned for bidirectional requests. The two nodes 102 and 111 collect measurements periodically and associate the measurements to the appropriate path on which packet data are sent to the MT 12. Both the first and second aggregation nodes 102 and 111 store them locally in databases 104 and 113 respectively. The first aggregation node 102 and the second aggregation node 111 provide the necessary information about the available resources to the BB node 106. The first aggregation node 102 and the second aggregation node 111 may be collocated with link 115 or use as standalone network elements as shown in Figure 2. The first and second aggregation nodes 102 and 111 also comprise local PDPs (LPDP 105 and LPDP 114) for local treatment of decisions of policies. The PCF 109 manages the LPDP 105 and LPDP 114 for local application of policy-based admission control.

The BB node 106 comprises a manager 107, a Policy Control Function (PCF) 109 and a Measurement-Based Admission Control mechanism (MBAC) 206 that may use an AC-MVEv2/AC-KQv2 algorithm along with QoS measurements for determining if transmissions of packet data are admitted or not on an assigned path for the MT 12. The manager 107 supports measurements and stores received results from agents 103 and 112 in a database 108. The PCF 109 provides a set of policies used in conjunction with the MBAC mechanism 206. As a consequence, the BB node 106 optimizes the bandwidth resources and supports admission control in the packet data network 100. The agents 103 and 112, the manager 107, the MBAC mechanism 206 and the PCF 109 may be software, hardware or any combination thereof, The manager 107 comprises a database for storing measurements and path identifier and the PCF 109 comprises a database for storing policies for admission control and binding with path states and available resources. The database 110 may be a policy information database (PIB) for storing policy-based control admission, which is a set of rules to be applied to an assigned path for admitting resource to the MT 12 that requests packet data services.

The present invention can preferably be described with reference made to a General Packet Radio Services (GPRS) network but may be applied to any packet data telecommunications network. More particularly, the packet data network 100 may be any 2G network such as in a Time Division Multiple Access (TDMA) network or a Code Division Multiple Access (CDMA), 2.5G networks such as a General Packet Radio Service (GPRS) any 3G Universal Mobile Telecommunications Systems (3G UMTS) network such as a CDMA2000 network a Wideband Code Division Multiple Access (WCDMA) network, a Global System for Mobile Communications/Enhanced Data for GSM Evolution (GSM/EDGE) or a High Speed Packet Data Access (HSPDA) network. The present invention may also be applicable to Institute of Electrical and Electronics Engineers (IEEE) 802.11, WiMAX IEEE 802.16, and NGN Functional Architecture: Resource and Admission Control Subsystem (RACS), European Telecommunications Standards Institute (ETSI) ES 201 v 1.6.2.

For example, a second aggregation node may be a Gateway GPRS Service Node (GGSN), a first aggregation node may be a Serving GPRS Service Node (SGSN) in a GPRS network and a AF may be a Proxy-Call Session Control Function (P-CSCF) for forwarding of messages received from a MT. Furthermore, if there is a common core network between the MT 12 and the first or second aggregation nodes 102 and 111 or a collocated node combining the function of both nodes 102 and 111.

In the present invention, the method and the BB node 106 are based on policies and measurements-based admission control. The invention may use pseudo-static L-LSPs as a path for transmitting packet data to the MT 12. L-LSPs are said pseudo-static because they are predefined for each class of traffic offline by a Traffic Engineering-Configuration Management System (TE-CMS) entity for requesting a path set up for a new LSP in the service. The TE-CMS is responsible for reading the network topology and based on this it calculates a path to be assigned to the MT 12. The path, may be terminated, created or modified dynamically in the packet data network 100, Their duration exceeds that of a single flow but it is not perpetual. The creation / modification/ termination of the path is commanded by the PCF 109 decisions in response to time or event-related policies such as time of day or network state. The resources or paths in the packet data switched network 100 may alternatively be based on MPLS, Virtual protocol label Switching (VPLS) or Ethernet over optical while not being limited to.

Whenever the MT 12 wishes to receive packet data services from the packet data switched network 100 or wishes to send packet data to the MT or SA 22 of the packet data switched network 100, the MT 12 sends a packet data session request 120 to the first aggregation node 102 for establishing a packet data session. The request 120 includes parameters for identifying and authenticating the MT 12 in the packet data network 100.

The packet data session may be a Session Initiation Protocol (SIP) session as defined in 3GPP Technical Specification Group Services and System Aspects, end-to-end quality of QoS concept and architecture, 3GPP TS 23.207 v5.8.0 (2003-06), 47 pages, published in 2003 by 3GPP. The packet data session may alternatively be an Extensible Authentication Protocol (EAP) session as defined in RFC 3748, published by the IETF, June 2004.

Upon reception of the session requests 120 the first aggregation node 102 starts the QoS authorization phase for authorizing the packet data session between the MT 12 and another MT or SA 22 (step 124). During phase 124, the MT 12 receives a token 122 from the first aggregation node 102. The token is later used for authentication by the network 100 and for authorizing the MT 12 to receive and sends packet data during the packet data session. Alternatively, the packet data session may be established by any protocol that provides authentication of an MT. In some protocols the MT 12 does not need to provide a token. Therefore, the network 100 may alternatively authenticate the MT 12 without the need of a token provided by the MT 12 and therefore the sending of some messages for authenticating the MT 12 may be rendered not necessary.

After completion of the authorization phase, the MT 12 sends a Request message 126 for initiating a resource reservation of path such as LSPs. At step 128, reservation phase is established between the MT 12 and the MT or a SA 22 for providing packet data services to the MT 12. Next, a node such as a Traffic Engineering-Configuration Management System (TE-CMS) entity (not shown) in the packet data network 100 assigns a path set up for a new path 231 for the MT 12. The path 231 is assigned for transmitting packet data for the MT 12 (step 129). The path is defined towards the MT 12, the AF 101, first aggregation node 102, the second aggregation node 111 and ultimately the MT/SA 22,

Following this, the first aggregation node 102 periodically collects by the agent 103 QoS measurements 131 for the path 231 assigned to the MT 12 (step 130). The QoS measurements 131 are stored in the database 104 by the agent 103 and are sent to the PCF 109, at step 133. The database 104 may be a Management Information Base (MIB), which is a collection of information that is organized hierarchically. A MIB is accessed using a network-management protocol such as SNMP. They are comprised of managed objects and are identified by object identifiers. In the database 104, the managed objects are path identifiers for identifying path assigned to the MT 12 and QoS measurements data measured in the packet data switched network 100.

At step 134, the PCF stores QoS measurements 131 in the database 110 and associates the path 231 to the QoS measurements 131. In parallel to step 134, the first aggregation node sends a request 135 for policy decision based admission control. Upon reception of the request 135, the PCF 109 verifies that an authorization state of the MT 12 is valid by looking in the database 110 and by applying the stored policies in the database 110, that the authorization state is valid (step 137).

If the authorization state is not valid the BB node 106 sends a rejection message 140 to the MT 12. However, if the authorization state is valid at step 139, the PCF 109 extracts the QoS measurements form the database 110 (step 141). Following this, the MBAC mechanism 206 decides on admission of path 231 based on policies stored in database 110 and the extracted QoS measurements 131 and executes MBAC on the assigned paths (step 142),

Based on a determination by the TE-CMS that the assigned path 231 is currently optimal and based on defined constraints the BB node 106 determines resource allocation: creation, modification or release of the path 231 (step 143). Following this, the BB node 106 sends a response message 144 for responding to the message 135 sent from the first aggregation 102. The response message 144 includes a path identifier 145 for identifying the path 231 that is created, modified or released.

Upon reception of the response message 144 the first aggregation node 102, sends a policy request message 147 for resource reservation to the second aggregation node 111. The request message 147 includes parameters for opening the packet data session in the packet data switched network 100. Following the reception of message 147, the second aggregation node 111 executes the reservation of resource for the MT 12 (step 148). The second aggregation node 111 sends a policy response message 150 to the first aggregation node 102 for responding to the request message 147 and more particularly for acknowledging that resource reservation has been accepted for the packet data session.

Following the reception of the response message 150, the first aggregation node 102 determines if the packet data session is accepted based on the response message 150 indicating that the reservation of resources has been made at the second aggregation node 111 (step 154). If the packet data session is not accepted at step 154 the first aggregation node 102 sends a rejection message 158 to the MT 12.

If the packet data session is accepted, the first aggregation node 102 forwards the response request 150 to the MT 12 for acknowledging that resource reservation has been accepted for the packet data session. A commitment phase 168 is then established for opening a gate and using path or resource allocation for transmitting packet data during the packet data session requested by the MT 12. Afterwards, the packet data session is established between the MT 12 and the MT or SA 22 in the packet data switched network 100 (step 170),

More particularly; the MBAC mechanism 206 provides admission control (algorithms and gating at commitment 168) and signaling. Admission control ensures based on measurements that sufficient network resources are available for each new path assigned, and the signaling is performed by using messages 144,147 and 150 for providing such resource allocation demands to each nodes along the path 231.

The management of QoS relies upon mechanisms that are local to the domains traversed by the connection and upon mechanisms dedicated to the inter-functioning of the UMTS network with external networks. Various protocols such as Resource Reservation Protocol (RSVP) and LDP can be used for signaling on the assigned paths for a MT, appropriate marking/labeling of the packets such as DiffServ, MPLS, interaction between policy control and/or resource management elements and, finally, SLA (expand acronym) agreements between operators. MPLS and DiffServ technologies may be used for policies' setup.

If a path is assigned to the MT 12 while the MT 12 is roaming in the network 100. The second aggregation node 111 or any node that acts as a gateway node for the MT 12 switches a traffic of packet data from a first assigned path in a first service area to a second assigned path in a second service area in the packet data network 100 when the MT 12 moves and consequently handoffs to the second service area in the packet data network 100.

Therefore, the present invention defines the aspect of resources' availability and makes modifications to the one of policy. Moreover, it offers a fairer compromise between the constraints of resources' utilization and QoS, thereby enabling the respect of the requirements of the stringent QoS requirements. Finally, it leads to a greater cooperation between policies and resources availability. In particular, the method and BB node 106 of the present invention manages high QoS for multimedia applications such as VoIP, Video on demand and Interactive TV and users application such as mission critical services including 911 and telemedicine sessions based on EISS with the addition of the present invention. As a consequence, the present invention may manage the QoS for high scalable services and not only for VoIP and multimedia such as for the IMS.

It can be understood that some messages and therefore some parameters sent from the MT 12 to the packet data network 100 and vice versa are not mentioned nor described for clarity reasons. Also some messages and therefore some parameters sent between network elements in the packet data network 100 are omitted for clarity reasons. More particularly, it should also be understood that Figures depict a simplified packet data network 100, and that many other network elements have been omitted for clarity reasons only. Furthermore, Figure 2 shows that only one path 231 is assigned to the MT 12, but it can be understood that more that one path may simultaneously be assigned to the MT 12 and therefore a plurality of packet data services may simultaneously be provided to the MT 12 on different assigned paths. The method establishes a packet data session for a MT, but it can be appreciated that the BB node 106 may simultaneously admit paths based on policies for a plurality of MTs.

Although several preferred embodiments of the method and the Bandwidth Broker node of the present invention have been illustrated in the accompanying Drawings and described in the foregoing Detailed Description, it will be understood that the invention is not limited to the embodiments disclosed, but is capable of numerous rearrangements, modifications and substitutions without departing from the present invention as set forth and defined by the following claims.

## Claims

1. A method for establishing a packet data session for a Mobile Terminal (MT) in packet data network, the method comprising steps of:
receiving at a Bandwidth Broker (BB) node from an aggregation node, Quality-of-Service (QoS) measurements for a path assigned to the MT, the path being assigned for transmission of packet data for the MT;
storing at the BB node the received QoS measurements from the aggregation node;
receiving at the BB a request message for admitting the assigned path at the BB node;
verifying at the BB node, based on policies stored at the BB node, the authorization state for the assigned path;
extracting QoS measurements at the BB node; and
admitting at the BB node the assigned path based on the extracted QoS measurements and on policies stored at the BB node.

2. The method of claim 1, wherein the method executes the following steps prior the step of receiving QoS measurements at the BB node from the aggregation node:
sending from the MT to an Application Function (AF) a session establishment message for receiving packet data services at the MT;
initiating an authorization phase for authorizing the session for the MT in the packet data network;
initiating a reservation phase for reserving resources for the MT for the MT in the packet data network;
defining towards the packet data network the assigned path for the MT; and
collecting at the aggregation node periodic QoS measurement for the assigned path,

3. The method of claim 1, wherein the step of storing includes a step of associating the QoS measurements with an identifier for identifying the assigned path at the BB node.

4. The method of claim 1, wherein the step of verifying includes a step of sending from the BB node to the MT a rejection message, if the authorization state for the assigned path is not valid.

5. The method of claim 1, wherein the step of admitting includes a step of creating, modifying and releasing the assigned path for the MT at the BB node.

6. The method of claim 5, wherein the method further comprises the steps of:
sending from the BB node a response message to the aggregation node, the response message a assigned path identifier for identifying the assigned path;
reserving, based on policy stored in the database, the resources at the aggregation node for the assigned path;
determining at the aggregation node, based on the received response, that the packet data session is accepted for the MT:
if the packet data session is not accepted:
sending from the aggregation node to the MT a rejection message;
if the message is accepted:
initiating a commitment phase for the MT; and
admitting the packet session for the MT.

7. A Bandwidth Broker (BB) node for admitting an assigned path for a Mobile Terminal (MT) in a packet data network, the BB node comprising:
a manager for receiving from an aggregation node Quality-of-Service (QoS) measurements for the path assigned to the MT, storing the received QoS measurements in a first database and receiving a request message for admitting the assigned path, wherein the path is assigned for transmission of packet data for the MT;
a Policy Control Function (PCF) for verifying, based on policies stored in a second database, the authorization state for the assigned path and extracting QoS measurements from the first database; and
a measurement-based admission control mechanism for admitting the assigned path based on the extracted QoS measurements and on policies stored in the second database.

8. The BB node of claim 7, wherein the PCF further sends from the BB node to the MT a rejection message, if the authorization state for the assigned path is not valid.

9. The BB node of claim 8, wherein the PCF further creates, modifies and releases the assigned path for the MT after admitting the assigned path.

10. The BB node of claim 7, wherein the BB node further:
sends a response message to the aggregation node, the response message including a path identifier for identifying the assigned path; and
reserves, based on policy stored in the database, the resources at the aggregation node for the assigned path.
